# EUROPEAN PATENT APPLICATION

(11) **EP 1 022 837 A2**
(43) Date of publication of application: **26.07.2000**
(21) Application number: 00300406.6
(22) Date of filing: 20.01.2000
(51) Int. Cl.: H02H 3/04, H02H 9/04

(54) **Surge protector**

(30) Priority: 22.01.1999 GB 9901286
(71) Applicant: Zymax International Limited, Bideford, North Devon EX39 3DX (GB)
(72) Inventor: Clarke, Graham John, Zymax International Ltd., Bideford, North Devon EX39 3DX (GB)
(74) Representative: Craske, Stephen Allan

(57) **Abstract**

A varistor MOV is connected across a power supply LN to protect equipment connected at AB against voltage spikes. Leakage current through the varistor is monitored by a thermal sensor 20 and microchip 12, which also receives input from an ambient temperature sensor 22 remote from the varistor. When the difference between the sensed temperatures exceeds a predetermined operating level, before dangerous overheating of the varistor occurs, the microchip signals a warning condition by illumination of LED 14 and/or operation of a tone generator 16. The user is thus given a warning that the device is ageing and will shortly need replacing, whilst the protected equipment remains fully operational.

## Description

### TECHNICAL FIELD OF THE INVENTION

This invention relates to voltage surge protectors.

### BACKGROUND

Varistors are low cost voltage dependent, non-polarised metal oxide semiconductor devices which are widely used to protect equipment against power surges accompanied by high transient voltage spikes. They can absorb very high energy levels generated from lightning, EMC, static or other interference sources. When properly selected, the varistor exhibits a high impedance at the normal working voltage, but when a high voltage appears the impedance changes to a very low conducting value so that the varistor absorbs the energy of the power surge, clamping the voltage spike to a protective level.

Because of the sensitivity of modern electronics to power supply fluctuations these devices are proving very popular, but unfortunately for the user, the clamping voltage of these devices reduces with use and age. In fact there have been cases where the clamping voltage has dropped to such an extent that the normal supply voltage is clipped. When this happens the result is generally self destructive. The varistor overheats as it tries to hold the supply voltage down, presenting a considerable fire hazard.

It has already been proposed to use a thermal fuse which disconnects the equipment if the working temperature of the varistor should rise to a dangerously high level. This can be achieved using a compound that melts at high temperatures, causing a fuse to blow or other mechanical disconnection from the power source.

The present invention seeks to provide a new and inventive form of surge protector.

### SUMMARY OF THE INVENTION

The present invention proposes a surge protector of the kind which comprises a varistor, which includes means for monitoring the leakage current flowing through the varistor and generating a warning signal when the leakage current rises above a predetermined level while the surge protector is still functioning to protect against voltage transients.

The monitoring means thus follows the ageing process and gives advance warning of possible future failure rather than responding to the occurrence of a failure condition.

The leakage current may be monitored directly or it may be monitored indirectly by following variations in temperature or another parameter which changes with current. When temperature is used the surge protector preferably includes an ambient temperature sensor, the warning signal being generated in response to a predetermined difference between the monitored temperature and ambient temperature. Thus, the surge protector will still accurately track the ageing of the varistor irrespective of the temperature of the operating environment.

The warning signal can be used to produce a warning annunciation, operate an audible or visual warning device, or trigger a remote warning device to alert the user to the fact that the device is ageing and will need replacing in the near future.

### BRIEF DESCRIPTION OF THE DRAWINGS

The following description and the accompanying drawings referred to therein are included by way of non-limiting example in order to illustrate how the invention may be put into practice. In the drawings:
Figure 1 is block schematic diagram showing a first form of surge protector in accordance with the invention, and
Figure 2 is a further block schematic showing a second embodiment of the invention.

### DETAILED DESCRIPTION OF THE DRAWINGS

This invention overcomes the problems associated with ageing or over-stressed varistors by monitoring the leakage current or associated temperature rise due to self-heating.

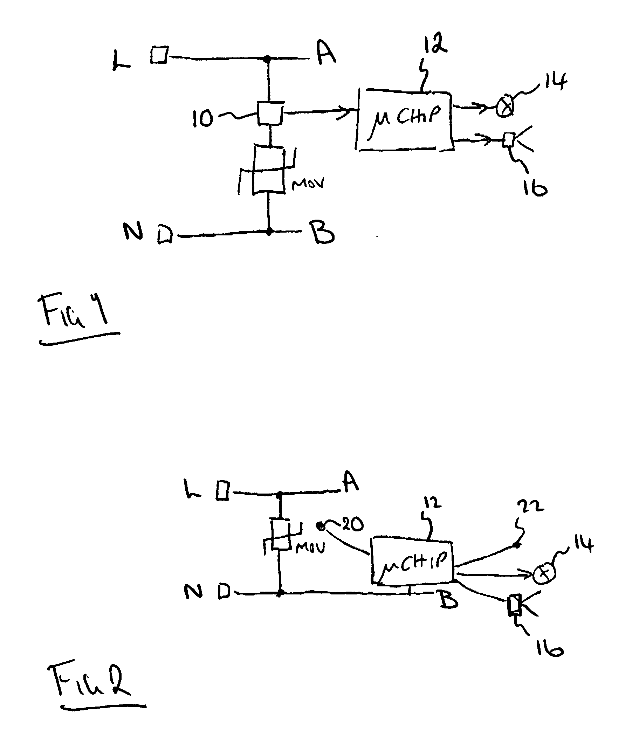

Referring firstly to Fig. 1, the surge protector comprises a varistor MOV which is connected across a power supply LN in order to protect equipment connected at AB against voltage spikes. A current monitor 10 is connected in series with the varistor to allow the leakage current through the varistor to be sensed by a microchip 12. When the leakage current through the varistor rises above a predetermined operating level, and before it reaches a level which would result in dangerous overheating of the varistor, the microchip causes a warning condition to be signalled by illumination of an LED 14 and/or activation of an audible tone generator 16.

In the second form of surge protector shown in Fig. 2, the leakage current is monitored indirectly by a thermal sensor 20 (e.g. a semiconductor diode) mounted in close thermal relationship with the varistor. A second ambient temperature sensor 22 is mounted remote from the varistor, the signals from both sensors being monitored by the microchip 12. When the difference between the sensed temperatures exceeds a predetermined operating level, before dangerous overheating of the varistor occurs, the microchip signals a warning condition by illumination of LED 14 and/or tone generator 16.

In both forms of the surge protector the warning signal generated by the microchip could be used to initiate various warning actions or safety procedures. The warning condition can be signalled remotely from the varistor if desired. In the case of an audible warning this could include an annunciation which indicates the condition of the varistor, ranging from an initial indication of deterioration to a warning of impending failure. The user is thus given a warning that the device is ageing and needs replacing, whilst the protected equipment remains fully operational. Full and effective surge protection is given right up until the varistor reaches hazardous temperatures, although it should obviously be replaced well before this occurs.

This solution is clearly an improvement over previous proposals since a warning is given long before the varistor goes into the dangerous self-destruct mode. The system is pro-active and, unlike previous proposals, doesn't wait until a dangerous condition exists. The user has full surge protection right up until the end of the varistors working life before a fuse is blown or a cut-out device is operated so that, in the case of a computer for example, there is no unexpected failure and consequent data loss.

It will be appreciated that the features disclosed herein may be present in any feasible combination. Whilst the above description lays emphasis on those areas which, in combination, are believed to be new, protection is claimed for any inventive combination of the features disclosed herein.

## Claims

1. A surge protector of the kind which comprises a varistor (MOV)
*characterised by*
means (10, 12; 20, 12) for monitoring the leakage current flowing through the varistor and generating a warning signal when the leakage current rises above a predetermined level while the surge protector is still functioning to protect against voltage transients.

2. A surge protector according to Claim 1, in which the leakage current is monitored by current sensing means (10) connected in series with the varistor.

3. A surge protector according to Claim 1, in which the leakage current is monitored by means (20) for sensing a parameter which changes with current.

4. A surge protector according to Claim 3, in which the leakage current is monitored by a temperature sensor (20) which is arranged to sense the temperature of the varistor.

5. A surge protector according to Claim 4, in which the surge protector includes an ambient temperature sensor (22), and the warning signal is generated in response to a predetermined difference between the monitored temperature and ambient temperature.

6. A surge protector according to any preceding claim, in which the warning signal operates an audible warning device (16).

7. A surge protector according to Claim 6, in which the audible warning device (16) emits an annunciation.

8. A surge protector according to any preceding claim, in which the warning signal operates a visible warning device (14).

9. A surge protector according to Claim 8, in which the visible warning device (14) comprises a light emitting diode.

10. A surge protector according to any of Claims 6 to 9, in which the warning device (14, 16) is located remote from the varistor.
